# EUROPÄISCHE PATENTANMELDUNG

(11) **EP 3 604 154 A2**
(43) Veröffentlichungstag der Anmeldung: **05.02.2020**
(21) Anmeldenummer: 19189776.8
(22) Anmeldetag: 02.08.2019
(51) Int. Cl.: B65D 5/56, B65D 77/20, B31B 120/40

(54) **VERPACKUNG**

(30) Priorität: 03.08.2018 DE 102018118940
(71) Anmelder: Van Genechten Packaging N.V., 2300 Turnhout (BE)
(72) Erfinder: Engel, Gottfried, 87452 Altusried (DE)
(74) Vertreter: Patentanwaltzkanzlei Hutzelmann

(57) **Zusammenfassung**

Verpackung, insbesondere Verpackungsschale (1), aus einem Zuschnitt mit einem Boden (2) und daran angeordneten Seitenwänden (3, 4), aus Karton, Pappe, Papier oder dergleichen und wenigstens einer darauf auf der Kartonoberseite angeordneten Kunststofffolie (8), wobei die Kunststofffolie (8) der Form der Verpackungsschale (1) angepasst ist und dieser entspricht, wobei die Verpackung an sich als stabile Verpackung gefertigt sein kann, das heisst, die Seitenwände (3, 4) können aneinander befestigt sein und wobei die Kunststofffolie (8) in die Verpackungsschale (1) hinein tiefgezogen oder hinein tiefgedrückt sein kann.

## Beschreibung

Die Erfindung bezieht sich auf eine Verpackung, insbesondere Verpackungsschale, aus einem Zuschnitt mit einem Boden und daran angeordneten Seitenwänden, aus Karton, Pappe, Papier oder dergleichen und wenigstens einer darauf auf der Kartonoberseite angeordneten Kunststofffolie.

Bekannt sind Kunststoffschalen, in welche vorzugsweise frische oder tiefgefrorene Lebensmittel unter modifizierter Atmosphäre verpackt werden.

Der Verbrauch an Kunststoff für derartige Verpackungen ist jedoch sehr hoch. Die eingesetzten Kunststoffe lassen sich nur schlecht wiederverwerten und sind in der Regel nur schlecht biologisch abbaubar.

Aus diesem Grund wurden bereits Anstrengungen unternommen, diese Verpackungen für MAP (Modified Atmosphere Packaging) durch Kartonverpackungen und Kartonverbundverpackungen zu ersetzen.

Die Kartonverpackungen lassen sich oftmals nur schlecht gasdicht verschließen.

Bei Verbundverpackungen wurden bereits Inlays aus Karton vorgesehen, welche in der Lage waren, Wände und Bodenflächen der Verpackungen zu stützen und so den Einsatz von Kunststofffolie zu ermöglichen.

Allerdings weisen die dort eingesetzten Kunststofffolien noch sehr hohe Materialstärken auf. Die Stabilität der Verpackungen lässt zu wünschen übrig. Eine Trennung von Karton und Kunststoff ist, wenn überhaupt, nur schwer möglich.

Der Erfindung liegt daher die Aufgabe zugrunde, eine Verpackung vorzuschlagen, welche stabil ist, den Kunststoffanteil weitestgehend reduziert und trotzdem eine einfache Trennung von Kunststoff und Karton ermöglich, ohne die Dichtigkeit der Verpackung negativ zu beeinflussen.

Diese Aufgabe wird erfindungsgemäß dadurch gelöst, dass die Kunststofffolie der Form der Verpackungsschale angepasst ist und dieser entspricht.

Hierdurch wird eine stabile Verpackung geschaffen, die sich durch die Kunststofffolie dicht verschließen lässt.

Dabei hat es sich als sehr vorteilhaft erwiesen, wenn ein wenigstens teilweise umlaufender Randflansch vorgesehen ist, auf welchem ein Deckel, der aus Folie oder Verbundmaterial gefertigt sein kann und auch Teil der Verpackung sein kann, aufgesiegelt oder aufgeklebt ist.

Damit wird ein stabiler Rand geschaffen, auf den dann der Deckel aufgebracht sein kann.

Weiterhin hat es sich als sehr vorteilhaft erwiesen, wenn die Kunststofffolie in die Verpackungsschale hinein tiefgezogen oder hinein tiefgedrückt ist.

Dadurch wird die aus Karton oder Papier gefertigte Verpackungsschale mit einer dünnwandigen Kunststofffolie ausgekleidet. Das Tiefziehen kann mit Unterdruck, aber auch mit Überdruck erfolgen.

Äußerst vorteilhaft ist es erfindungsgemäß auch, wenn die Verpackung an sich als stabile Verpackung gefertigt ist, das heisst, die Seitenwände sind aneinander befestigt.

Hierdurch kann die Dicke der Kunststofffolie auf ein Minimum begrenzt werden. Es ist denkbar, daß die Dicke der Kunststofffolie bis in den zweistelligen oder gar einstelligen Mikrometerbereich reduziert werden kann.

Gemäß einer weiteren Ausgestaltung der Erfindung ist es besonders vorteilhaft, wenn die Kunststofffolie als nachträgliche, filmbildende Beschichtung ausgebildet ist.

Damit wird eine weitere Möglichkeit geschaffen, eine dünne, aber dennoch dichte Kunststoffschicht in einer Kartonverpackung insbesondere für MAP einzubringen.

Gemäß einer Fortbildung der Erfindung ist es auch sehr vorteilhaft, wenn eine Grifflasche bzw. ein Eingriff in der Kartonverpackung vorgesehen ist.

Hierbei kann eine Grifflasche an der Außenseite des Kartons angeklebt sein.

Gerade wenn die Grifflasche aus einer Zwickelecke, einer Klebelasche oder dergleichen gefertigt ist, kann diese auf der Außenseite der Kartonverpackung angeklebt sein und ist so leicht ergreifbar, aber dennoch geschützt.

Dabei ist es äußerst vorteilhaft, wenn eine Perforation, Ritzlinien oder andere Schwächungen vorgesehen sind, entlang welcher die Kartonverpackung auftrennbar oder ein Teil herauslösbar ist.

Äußerst vorteilhaft ist es erfindungsgemäß auch, wenn ein Aufreißband vorgesehen ist.

Mit einem solchen Aufreißband kann die Kartonverpackung leicht aufgetrennt oder ein Teil herausgelöst werden.

Ebenfalls sehr vorteilhaft ist es in diesem Zusammenhang, wenn die Kunststofffolie und die Kartonverpackung voneinander ablösbar ausgebildet sind.

Durch diese Merkmale lassen sich die Kunststofffolie und die Kartonverpackung sehr leicht voneinander trennen und getrennt der Verwertung zuführen.

Äußerst vorteilhaft ist es erfindungsgemäß auch, wenn ein quer, längs, diagonal oder anderweitig über die Verpackung oder einen Teilbereich der Verpackung laufender Streifen aus der Kartonverpackung herauslösbar ausgebildet ist.

Damit wird ein besonders leichter Zugriff auf die Kunststofffolie ermöglicht.

Ebenfalls sehr vorteilhaft ist es erfindungsgemäß, wenn eine Ecke oder Seitenwand bzw. ein Teil derselben aus der Kartonverpackung herauslösbar ausgebildet ist.

Auch hierdurch kann sehr leicht auf die Kunststofffolie zugegriffen werden.

Eine weitere, erfindungsgemäß sehr vorteilhafte Ausgestaltung liegt vor, wenn die Verpackung teilbar ausgebildet ist.

Durch das Teilen der Verpackung wird ebenfalls die Kunststofffolie und der Kartonteil voneinander getrennt.

Weiterhin hat es sich als sehr vorteilhaft erwiesen, wenn der herauslösbare Teil hinsichtlich seiner Breite zunimmt, ausgehend von der Anreißstelle.

Damit lässt sich der herauslösbare Teil besonders leicht herauslösen und es ergibt sich ein sehr guter Zugriff auf die Kunststofffolie.

Erfindungsgemäß ist es äußerst vorteilhaft, wenn die Kartonverpackung und die Kunststofffolie miteinander ablösbar verbunden sind und zwar durch Kleben, Adhäsion oder Siegeln.

Alle Möglichkeiten eröffnen eine ausreichende, aber wieder ablösbare Verbindung zwischen Kartonverpackung und Kunststofffolie.

Gemäß einer weiteren Ausbildung der Erfindung ist es äußerst vorteilhaft, wenn die Kartonverpackung über Zwickelecken oder Klebelaschen hinsichtlich ihrer Seitenwände verbunden ist, wobei die Zwickelecken ebenfalls verklebt sein können.

Hierdurch erhält die Kartonverpackung die erwünschte Stabilität, obwohl geringe Kartongewichte und damit geringe Kartonstärken eingesetzt werden. Dies führt zu einer deutlichen Materialersparnis.

Weiterhin hat es sich als sehr vorteilhaft erwiesen, wenn der Randflansch an den vom Boden wegweisenden Enden der Seitenwände angeordnet ist, wobei die Randflansche der einzelnen Seitenwände jeweils miteinander verbunden sein können, wobei diese miteinander versiegelt, miteinander verklebt, miteinander verschränkt, miteinander verhakt sein können, sich gegenseitig blockieren können oder aneinander stoßen.

Damit wird ein stabiler und umlaufender Randflansch geschaffen, auf den eine Deckelfolie oder ein Verbundmaterial aufgesiegelt werden kann. Durch eine Verbindung der einzelnen Randflanschabschnitte miteinander wird der Rand niedergehalten und ein ungewollte Aufrichten verhindert. Dabei ist es denkbar, wenn die Randflanschabschnitte in der Abpackmaschine miteinander versiegelt werden. Hierzu kann beispielsweise auf der Rückseite des Randes eine Siegelschicht vorgesehen sein, mit deren Hilfe die Randflanschabschnitte miteinander verbunden werden. Als Siegelschicht kann neben herkömmlichen Siegellacken auch beispielsweise eine PE-Beschichtung vorgesehen sein.
Durch das Verhindern des Aufrichtens des Randflansches wird auch ein Trommeleffekt des Deckels verhindert.

Sehr vorteilhaft ist es erfindungsgemäß auch, wenn der Randflansch wenigstens teilweise entweder durch die Kartonverpackung oder durch die Kunststofffolie gebildet ist.

So ist es denkbar, daß der Randflansch vollständig aus dem Kunststoffmaterial gebildet ist. Ebenso denkbar ist, daß der Randflansch zu einem Teil seiner Breite aus Kartonmaterial gefertigt ist, wobei das Kartonmaterial durch das Kunststoffmaterial überdeckt wird. Ebenso denkbar ist, daß das Kartonmaterial sich über die volle Breite des Randflansches erstreckt.

Sehr vorteilhaft ist es erfindungsgemäß auch, wenn der im Karton vorgesehene Randflansch wenigstens in Überlappungsbereichen oder im Bereich von Stoßkanten verdünnt ausgebildet ist, wobei hierzu eine Fräsung vorgesehen sein kann.

Wenn der Karton-Randflansch hinreichend dünn ist, kann das Kunststoffmaterial bestehende Unebenheiten oder Spalten im Bereich von Stoßkanten überbrücken und es kann trotzdem eine dichte Siegelung eines Deckels hergestellt werden. Dabei kann die Fräsung sich auch über den kompletten Randflansch oder einzelne Seiten des Randflansches erstrecken.

Eine weitere sehr vorteilhafte Ausgestaltung der Erfindung liegt vor, wenn im Boden und/oder den Seitenwänden der Kartonverpackung Öffnungen vorgesehen sind, durch die hindurch der Unterdruck zum Tiefziehen der Kunststofffolie in die Kartonverpackung hinein anlegbar ist bzw. verdrängte Luft zu entweichen vermag.

Dadurch wird das Tiefziehen der Kunststofffolie erleichtert. Unterdruck zum Tiefziehen kann durch die Kartonverpackung hindurch auf die Kunsttsofffolie wirken.

Sehr vorteilhaft ist es erfindungsgemäß auch, wenn eine Rückseitenbeschichtung, eine Rückseitenfolie, eine Imprägnierung, ein Lack und/oder eine Papierkaschierung auf der Kartonrückseite vorgesehen ist.

Damit wird die Kartonverpackung auch auf ihrer von der Kunststofffolie abgekehrten Seite gegen Umwelteinflüsse geschützt.

Eine weitere sehr vorteilhafte Ausgestaltung liegt vor, wenn auf einer oder beiden Kartonseiten und/oder auf einer der Kunststofffolien oder Beschichtungen ein Druckbild vorgesehen ist.

Damit können erwünschte und notwendige Informationen, aber auch Dekorationen oder dergleichen auf der Verpackung vorgesehen werden.

Sehr vorteilhaft ist es erfindungsgemäß auch, wenn ein Chip, ein RFID Tag und/oder Einlagen wie beispielsweise Messer, Gabel und/oder Löffel und/oder Give-Aways zwischen oder in den Kunststofflagen und/oder im Karton vorgesehen sind.

Durch einen Chip und/oder RFID Tag kann eine Fälschungssicherheit, ein Nachweis der Lieferkette, der Kühlkette, aber auch ein Diebstahlschutz oder dergleichen hergestellt werden. Bei Fertiggerichten, Fertigsalaten oder dergleichen, die direkt verzehrt werden können, können Messer, Gabel und/oder Löffel so als Zugabe beigelegt sein. Diese können im Bodenbereich eingelegt sein. Ebenso ist beispielsweise die Beigabe von Give-Aways, aber auch Zutaten zum Verpackungsgut oder dergleichen auf diese Art und Weise denkbar.

Äußerst vorteilhaft ist es, wenn die Kunststoffolien und/oder Beschichtungen ein- oder mehrlagig ausgebildet sind und PE, PP, PA, PET, EVOH oder dergleichen enthalten können, wobei eine oder mehrere Barriereschichten vorgesehen sein können.

Hierdurch werden besonders gute Voraussetzungen für MAP geschaffen. Je nach verwendetem Material können unterschiedliche Anwendung gestaltet werden. Es sind Tiefkühlanwendungen genauso denkbar, wie Ofenanwendungen und Mikrowellenanwendungen.

Erfindungsgemäß ist es sehr vorteilhaft, wenn zumindest die Deckelfolie bzw. der Deckelverbund über eine Peel-Oberfläche oder Wiederverschlußoberfläche mit dem Korpus der Verpackung verbunden ist.

Damit kann eine Wiederverschließbarkeit der Verpackung geschaffen werden.

Sehr vorteilhaft ist es gemäß einer Weiterbildung der Erfindung auch, wenn zwischen dem Karton und dem Kunststoff eine Peelschicht vorgesehen ist.

Dadurch lässt sich Kunststoff und Karton sehr gut trennen.

Äußerst vorteilhaft ist es erfindungsgemäß auch, wenn auf der Kartonvorderseite und/oder auf der Folienrückseite wenigstens partiell eine Beschichtung oder ein Lack vorgesehen ist, wobei die Beschichtung auf der Kartonrückseite ausschließlich im Bereich des Randes vorgesehen sein kann.

Eine solche Beschichtung bzw. ein Lack kann einerseits die Haftung zwischen Karton und Kunststofffolie steuern. Andererseits kann hierdurch gerade bei tiefen Verpackungen das Tiefziehverhalten der Kunststofffolie beeinflusst werden, so daß tiefere Verpackungen geschaffen werden können. Auch der Einsatz von Tiefziehstempeln ist denkbar. Eine im Bereich des Randflansches angebrachte Beschichtung oder ein Lack dient als Haftvermittler, Siegelschicht oder dergleichen mit dem die Randflanschabschnitte miteinander verbunden werden können um ein unerwünschtes Aufrichten zu verhindern.

Äußerst vorteilhaft ist es erfindungsgemäß auch, wenn die Verpackung als schalenförmige Verpackung, Menüschale, Frozen-Food-Verpackung, als Sandwichverpackung oder als anderweitige Verpackung ausgebildet ist.

Damit lassen sich bereits große Anwendungsgebiete erreichen. Andere Ausgestaltungen der Verpackung sind denkbar.

Es hat sich erfindungsgemäß auch sehr vorteilhaft erwiesen, wenn dünnere Kartons und/oder dünnere Folien eingesetzt werden.

Durch das Zusammenwirken von Karton und Folie können die jeweiligen Materialstärken reduziert werden.

Im folgenden wird die Erfindung anhand mehrerer Ausführungsbeispiele veranschaulicht.

Dabei zeigen:
- Fig. 1: ein Schaubild einer erfindungsgemäßen Verpackung,
- Fig. 2: einen Zuschnitt einer erfindungsgemäßen Kartonverpackung mit heraustrennbarem Mittelstreifen,
- Fig. 3: einen Zuschnitt einer weiteren erfindungsgemäßen Kartonverpackung, die diagonal teilbar ist,
- Fig. 4: einen Zuschnitt mit heraustrennbarer Ecke mit einem Eingriff in einer Seitenwand,
- Fig. 5: einen Zuschnitt einer Variante des Zuschnitts gemäß Fig. 4,
- Fig. 6: einen weiteren Zuschnitt mit heraustrennbarer Ecke, der über die Ecke heraustrennbar ist,
- Fig. 7: einen Zuschnitt mit Aufreisslasche an einer Ecke,
- Fig. 8: einen Zuschnitt mit Grifflasche in einer Seitenwand,
- Fig. 9: einen Zuschnitt mit in einer Seitenwand eingelassenen Grifflaschen,
- Fig. 10: einen Zuschnitt mit einer in der Bodenfläche angeordneten Grifflasche, mit der ein Teil des Bodens und mindestens eine Seitenwand heraustrennbar ist,
- Fig. 11: einen Zuschnitt mit einer am Randflansch angeordneten, nach außen stehenden Grifflasche,
- Fig. 12: einen Zuschnitt mit einer Ecke des Randflansches angeordneten Ausnehmung zum Ergreifen der Kunststofffolie,
- Fig. 13: einen Zuschnitt mit einer im Randflansch angeordneten Vertiefung, welche einen Abstand zwischen Kunststofffolie und Karton bildet,
- Fig. 14: einen Zuschnitt mit einer Ausnehmung im Randflansch,
- Fig. 15: einen Zuschnitt mit einem sich gegeneinander verschränkenden Randflansch,
- Fig. 16: einen Zuschnitt mit abgeflachter Ecke mit Aufreißhilfe, und
- Fig. 17: eine Variante des Zuschnittes aus Fig. 16 mit abgeänderter Aufreißhilfe.

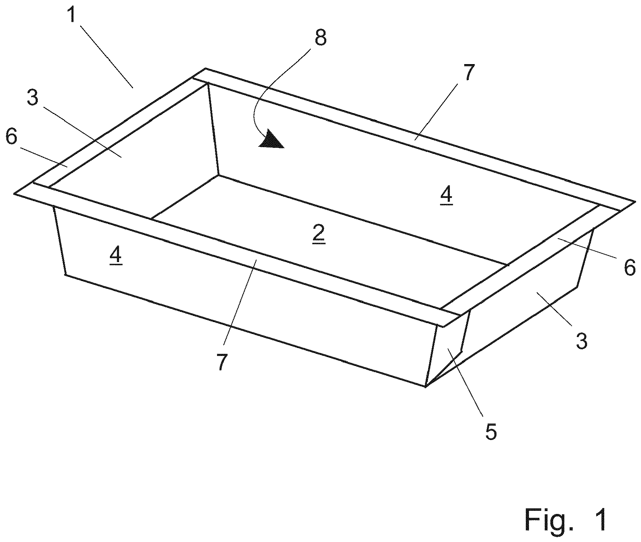

Mit 1 ist in Fig. 1 eine Kartonschale mit einem Boden 2 und vier daran angelenkten Seitenwänden 3 bzw. 4 bezeichnet. Die Seitenwände 3 sind über Klebelaschen 5 mit den Seitenwänden 4 verbunden, wobei diese verklebt oder versiegelt sein können. Anstelle der Klebelaschen 5 können auch Zwickelecken vorgesehen sein, mit deren Hilfe die Verbindung zuwischen den Seitenwänden 3 und den Seitenwänden 4 hergestellt wird.

An den vom Boden 2 wegweisenden Enden der Seitenwände 3 bzw. 4 sind einen Randflansch bildende Materialstreifen 6 und 7 vorgesehen.

Im vorliegenden Ausführungsbeispiel ragen die Materialstreifen 6 über die Breite der Seitenwände 3 hinaus, wohingegen die Materialstreifen 7 mit der Breite der Seitenwände 4 abschließen. Hierdurch stoßen die Materialstreifen 6 und 7 im aufgerichteten Zustand der Kartonschale 1 aneinander, so daß sich ein ebener, jedoch umlaufender Randflansch ergibt.

Es ist aber in diesem Zusammenhang auch denkbar, daß die Materialstreifen 6 und 7 derart ausgestaltet sind, daß diese sich im aufgerichteten Zustand der Kartonschale 1 überlappen. Es ist dabei möglich, daß die Überlappungsbereiche miteinander verklebt sind, so daß auch hier ein ebener Randflansch gebildet wird, der es ermöglicht, daß eine Deckelfolie oder ein Deckelverbund aufgesiegelt wird und so eine Verpackung für MAP geschaffen wird. Anstelle der Verklebung der Materialstreifen 6 und 7 können diese auch miteinander versiegelt, verschränkt oder ineinander verhakt sein oder sich gegeneinander blockieren. Bei einer Verklebung oder Versiegelung kann im Bereich des Randflansches eine Siegelschicht oder ein Siegellack vorgesehen sein. Dieser kann dabei auf der Rückseite des Randflansches aufgebracht sein. Oftmals wird die Verbindung der Materialstreifen 6 und 7 auch durch die anschließende Kunststofffolie hergestellt. Durch eine Verbindung der einzelnen Randflanschabschnitte miteinander wird der Rand niedergehalten und ein ungewollte Aufrichten verhindert. Dabei ist es denkbar, daß die Randflanschabschnitte erst in der Abpackmaschine miteinander versiegelt werden. Hierzu kann beispielsweise auf der Rückseite des Randes eine Siegelschicht vorgesehen sein, mit deren Hilfe die Randflanschabschnitte miteinander verbunden werden. Als Siegelschicht kann neben herkömmlichen Siegellacken auch beispielsweise eine PE-Beschichtung vorgesehen sein. Durch das Verhindern des Aufrichtens des Randflansches wird auch ein Trommeleffekt des Deckels verhindert.

Dabei können die Materialstreifen 6 und 7 in ihren Überlappungsbereichen, aber auch in ihren Stoßbereichen bzw. auch vollständig komprimiert, gefräst oder anderweitig hinsichtlich ihrer Dicke bearbeitet sein. Wenn dickerer Karton eingesetzt wird, besteht die Gefahr, daß bei Spalten oder auch Überlappungen die entstehenden Unebenheiten zu einer nicht mehr einwandfreien Versiegelung des Deckels auf dem Randflansch führen. Dies geschieht vor allem beim Einsatz dickeren Kartons. Auch wenn sich die Materialstreifen 6 und 7 überlappen, sorgt eine Komprimierung im Überlappungsbereich dafür, daß die Gesamtdicke im Überlappungsbereich nicht größer ist, wie im nicht überlappenden Bereich.

Eine andere Herangehensweise ist, den Randflansch entweder vollständig aus der Kunststofffolie zu bilden oder aber wenigstens den Randflansch nur zu einem Teil seiner Breite aus Kartonmaterial, welches natürlich mit der Kunststofffolie überzogen ist und zum anderen Teil aus der Kunststofffolie herzustellen.

Durch die Verbindung von Karton und tiefgezogener Kunststofffolie wird eine Stabilität erreicht, die weit über der einer reinen Kartonverpackung oder einer reinen Kunststoff-Verpackung liegt.

Die Seitenwände 3 und 4 können anstatt über Klebelaschen auch mittels nicht dargestellter Zwickelecken miteinander verbunden und aneinander befestigt sein.

Durch die stabile Kartonschale 1 ist es für eine gasdichte Verpackung ausreichend, wenn ein dünner Kunsttofffilm in die Kartonschale 1 hinein tiefgezogen wird. Der Kunststofffilm, der eine Kunststofffolie 8 darstellt, benötigt dabei keine mechanische Stabilität um auftretende Belastungen durch das Füllgut aufnehmen zu können.

Die Kunststofffolie 8 wird dazu in die Kartonschale 1 hinein tiefgezogen. Dazu können in der Kartonschale 1 Öffnungen vorgesehen sein, die hier beispielsweise als Schnitt-Rill-Kombinationen 9 ausgeführt sind, durch welche hindurch die Kunststofffolie 8 mit Unterdruck beaufschlagt werden kann, so daß sich diese an die Innenkontur der Kartonschale 1 anlegt. Ebenso kann durch die Öffnungen hindurch verdrängte Luft entweichen.

In diesem Zusammenhang ist es auch denkbar, daß auf die Kartonschale 1 eine Kunststoffbeschichtung aufgebracht wird, die einen Kunststofffilm bildet, der der Kunststofffolie 8 hinsichtlich seiner Wirkungsweise entspricht.

Die Kunststofffolie 8 hält in der Kartonschale 1 durch Adhäsion, durch Ansiegeln oder durch Kleben.

Wichtig ist, daß die Verbindung zwischen Kunststofffolie 8 und Kartonschale 1 ausreicht, daß die Verbindung bei normaler Benutzung der Verpackung nicht aufgetrennt wird, aber dennoch ein gewolltes Trennen möglich ist.

Nach Gebrauch der Verpackung, die in der Regel für die Verpackung von Tiefkühlkost, Fertiggerichten, aber auch frischen Lebensmitteln als Alternative zu reinen Kunststoffverpackungen, vor allem als MAP genutzt wird, kann der Kunststoffanteil und der Kartonanteil voneinander getrennt und der jeweiligen Entsorgung zugeführt werden. Der Anteil an Kunststoff wird so erheblich reduziert. Gerade bei Menüschalen, Tiefkühlkost, aber auch bei Sandwichverpackungen kann so unnötiger Plastikmüll vermieden und reduziert werden.

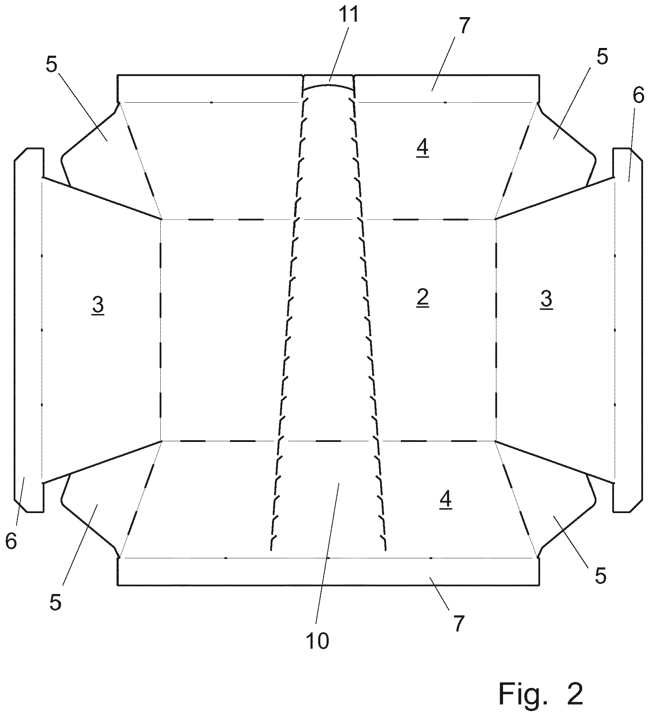

In Fig. 2 ist ein Aufreißstreifen 10 gezeigt, der ausgehend von einem Längsseitenrandflansch 7, über die erste Seitenwand 4, den Boden 2 und die zweite Seitenwand 4 zum zweiten Längsseitenrandflansch 7 verläuft. Über diesen Verlauf ist der Aufreißstreifen 10 sich verbreiternd ausgeführt. Am Beginn des Aufreißstreifens 10 ist eine Grifflasche 11 vorgesehen, die leicht ergriffen werden kann.

Zum Trennen der Verpackung in ihre Bestandteile wird nun der Aufreißstreifen 10 aus der Kartonschale 1 herausgelöst, so daß Zugriff auf die Kunststofffolie 8 vorliegt. Jetzt kann die Kunststofffolie leicht abgelöst werden.

Es ist auch denkbar, daß ein Aufreißband hinterlegt ist, welches anstatt des Aufreißstreifens 10 oder auch zu dessen Unterstützung genutzt werden kann.

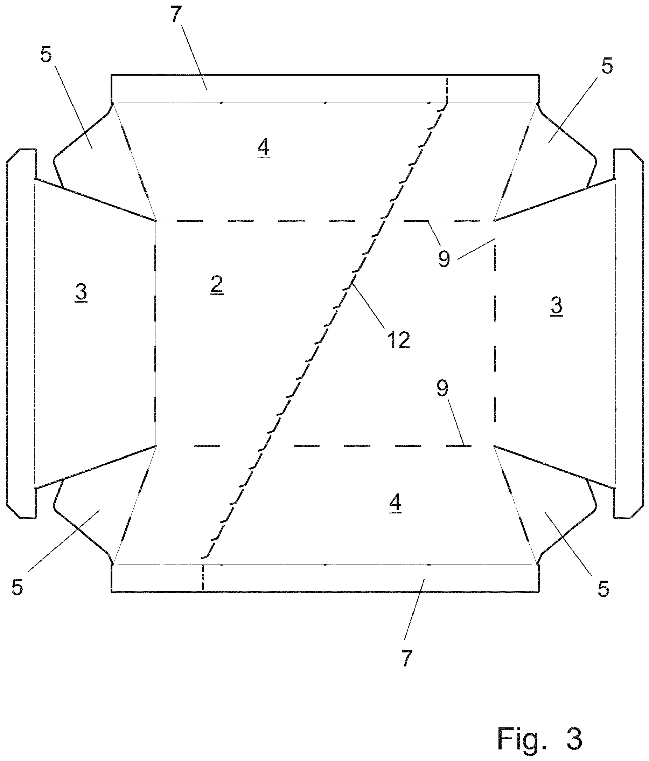

Im Ausführungsbeispiel gemäß Fig. 3 ist dagegen eine diagonal über den Zuschnitt verlaufende Perforation 12 vorgesehen, entlang der die Kartonschale 1 aufgetrennt werden kann. Dann liegt ebenfalls wieder die Kunststofffolie 8 frei und kann vom Karton getrennt werden.

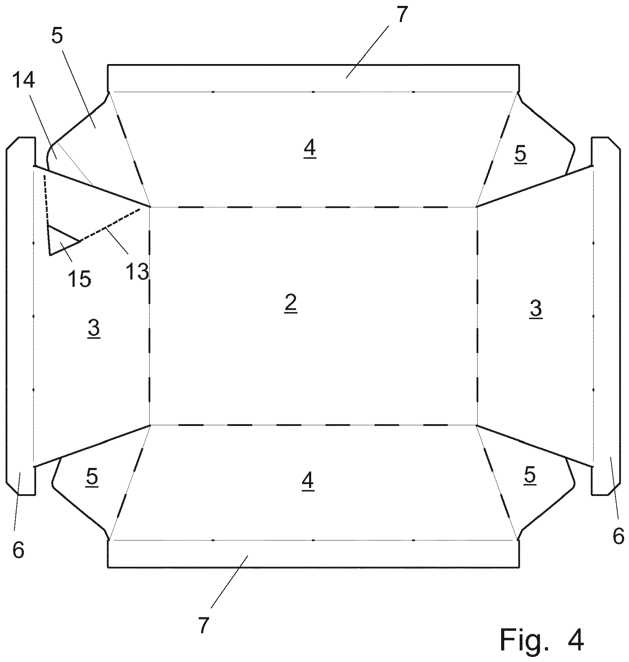

Im Ausführungsbeispiel gemäß Fig. 4 ist in einer Seitenwand 3 eine zur Klebelasche 5 hin laufende Perforation 13 vorgesehen. Die Perforation ist über eine Grifflasche 14, die über einer Ausstanzung 15 angeordnet ist, zugänglich. Mit der Perforation 13 kann ein Teil der Seitenwand 3 zur Klebelasche 5 hin herausgelöst werden, so daß wieder auf die Kunststofffolie 8 zugegriffen und diese vom Karton getrennt werden kann. Die Perforation ist dabei asymmetrisch geformt, wodurch vor allem am oberen Ende der Kartonschale 1 der Zugang zur Kunststofffolie 8 gewährleistet ist.

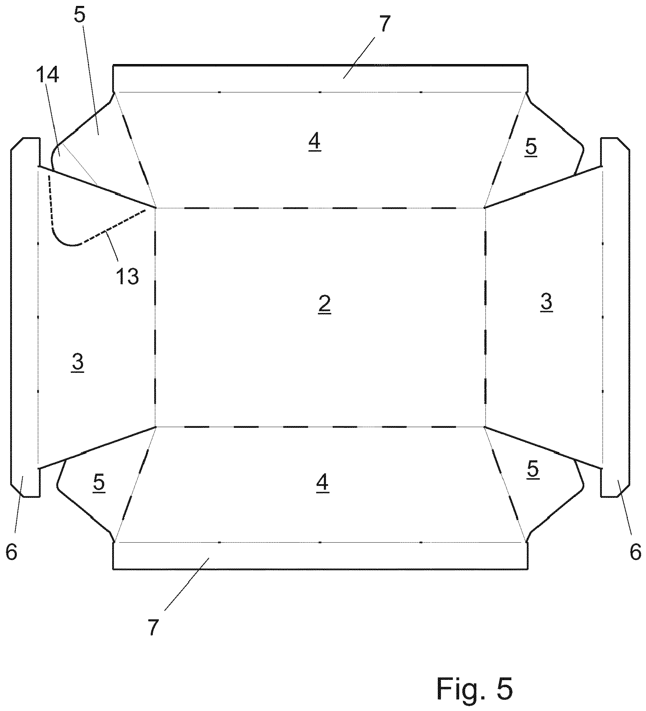

In Abwandlung hiervon zeigt Fig. 5 eine Variante bei der die Perforation 13 im wesentlichen gleichmäßig verläuft. Diese Perforation 13 lässt sich beispielsweise eindrücken und dann der Karton ergreifen. Ebenfalls denkbar ist, daß die Perforation 13 mit einer Grifflasche 14 in der Klebelasche 5 aufgetrennt werden kann. Zudem kann die Klebelasche außen auf die Verpackung aufgeklebt sein, so daß diese leicht ergriffen werden kann.

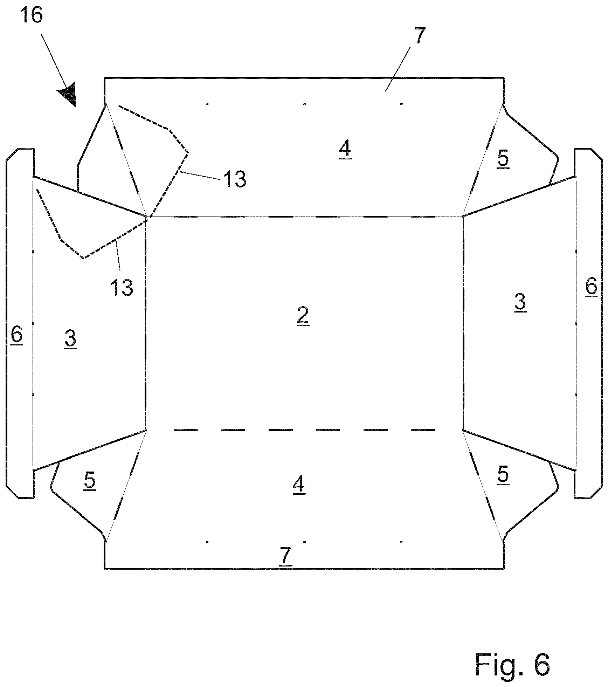

Zum Beispiel wenn eine Ausstanzung oder eine Grifflasche vermieden werden soll, kann die Perforation 13 sowohl in der Seitenwand 3 als auch in der Seitenwand 4 verlaufen, so daß die Ecke 16 durch zusammendrücken des Eckbereiches aufgetrennt und herausgelöst werden kann, wie dies in Fig. 6 dargestellt ist.

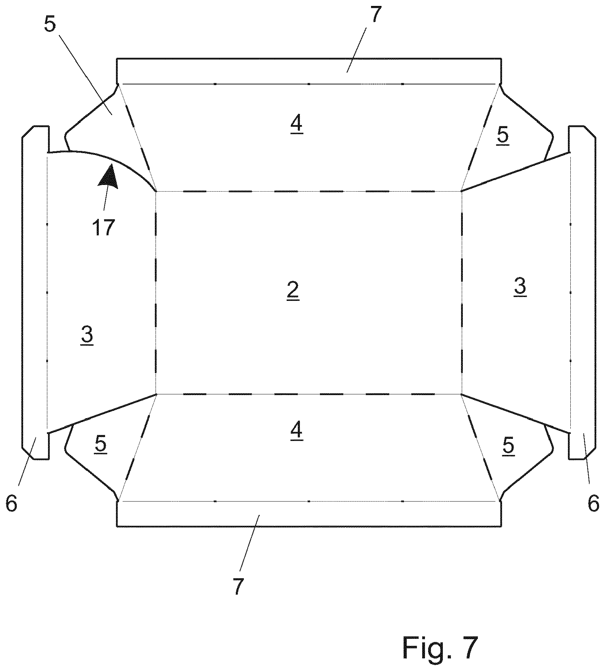

In Fig. 7 ist eine Variante dargestellt, bei der im Bereich der Klebelasche 5 Grifflaschen 17 vorgesehen sind, an welchen die Klebelasche 5 aufgerissen werden können, so daß wiederum die Kunststofffolie 8 frei liegt und vom Karton getrennt werden kann.

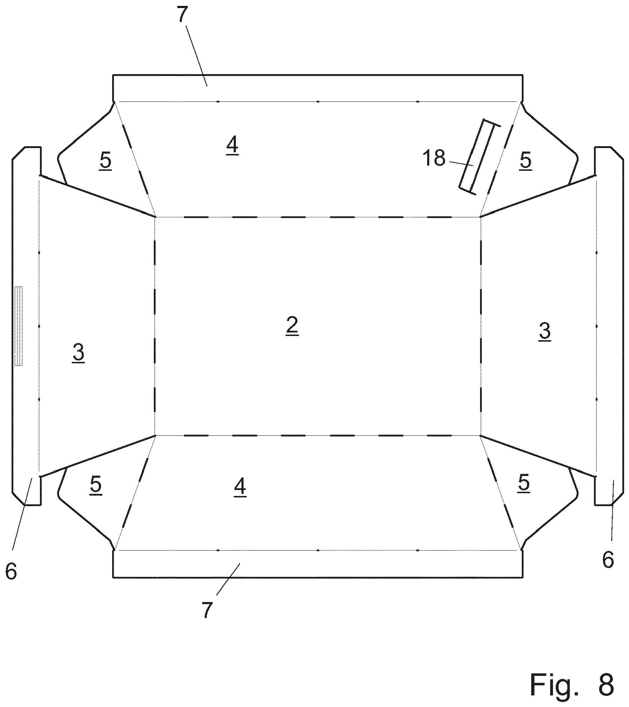

Diese Grifflaschen 18 können dabei aber auch in den Seitenwänden angeordnet sein, wie dies in Fig. 8 dargestellt ist.

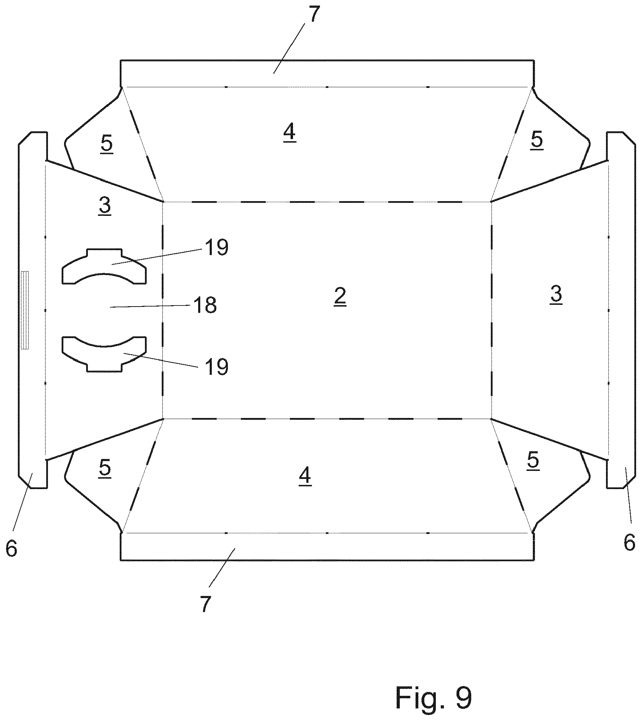

Weiterhin ist es denkbar, daß In den Seitenwänden 4 bzw. 3 zwei in geringem Abstand voneinander angeordnete Perforationen oder Grifflöcher 19 vorgesehen sind, die zusammen eingedrückt werden können und so Grifflöcher bilden. Zwischen den Perforationen 19 kann eine weitere Perforation angeordnet sein, die über die Höhe der jeweiligen Seitenwand verläuft. Nach dem Eindrücken der Perforationen 19 kann die Seitenwand über diese Perforation aufgetrennt werden. Dabei ist es denkbar, daß die Perforation über die gesamte Kartonschale 1 verläuft, wie dies in Fig. 9 dargestellt ist.

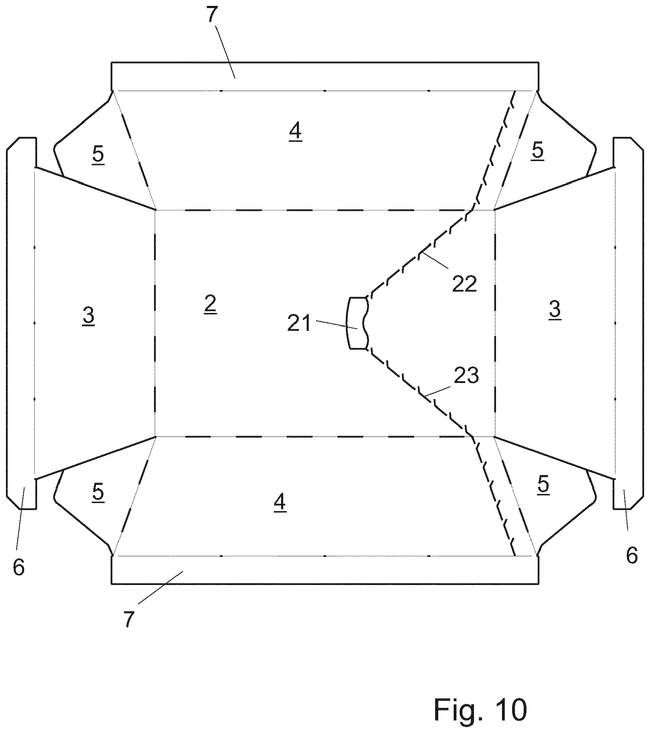

Auch eine Anordnung einer Grifflasche 21 im Boden 2 ist denkbar. Ausgehend von dieser Grifflasche sind zwei Perforationslinien 22 und 23 vorgesehen, welche zu zwei nebeneinander liegenden Ecken der Verpackung verlaufen, so daß ein Teil des Bodens und zumindest eine Seitenwand heraustrennbar ist. Auch dadurch kann die Kunststofffolie 8 ergriffen werden und vom Karton getrennt werden, wie dies in Fig. 10 dargestellt ist.

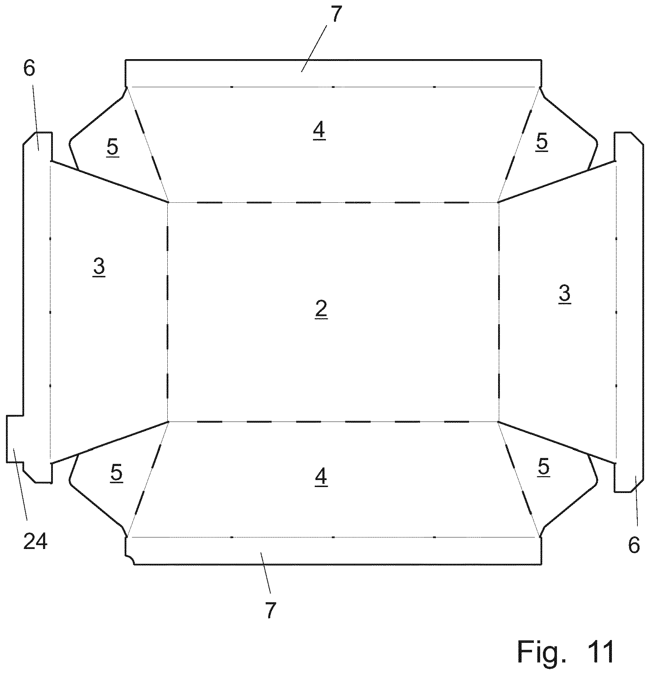

Eine weitere Variante ist in Fig. 11 dargestellt. Dabei ist an einem den Randflansch bildenden Materialstreifen 6 eine Grifflasche 24 angeformt, mit der die Trennung zwischen Karton und Kunststofffolie 8 eingeleitet werden kann.

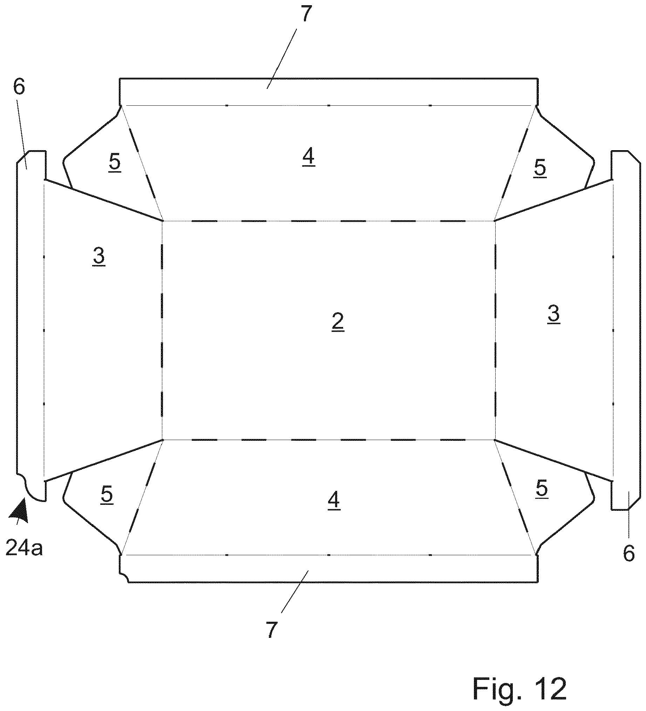

In Abwandlung hiervon ist es auch denkbar, daß der Materialstreifen 6 im Bereich einer Klebelasche 5 eine Ausnehmung 24a aufweist, an der die Kunststofffolie 8 ergriffen werden kann. Dies ist in Fig. 12 gezeigt.

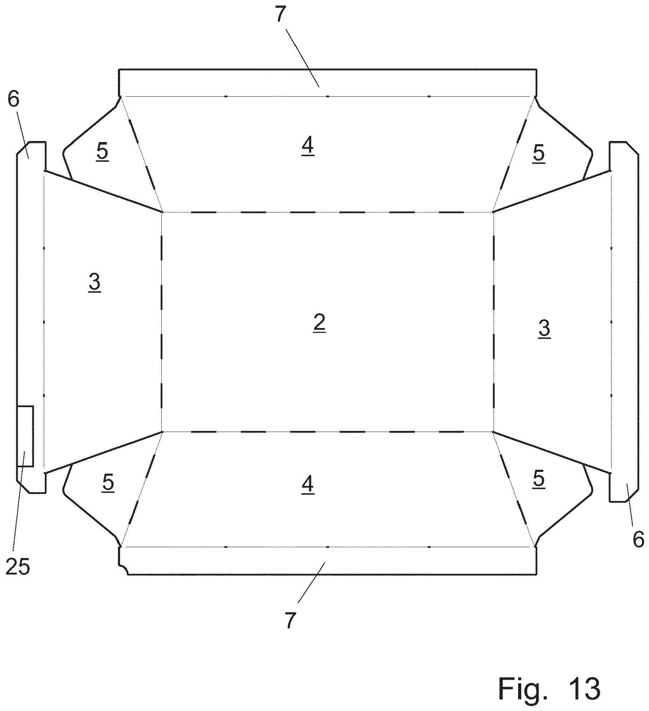

In weiterer Abwandlung hiervon kann auch eine Tiefprägung 25 am Rand des Materialstreifens 6 vorgesehen sein, die einen kleinen Abstand zwischen Karton und Kunststofffolie 8 erzeugt. Hier kann die Trennung eingeleitet werden, wie dies Fig. 13 zeigt.

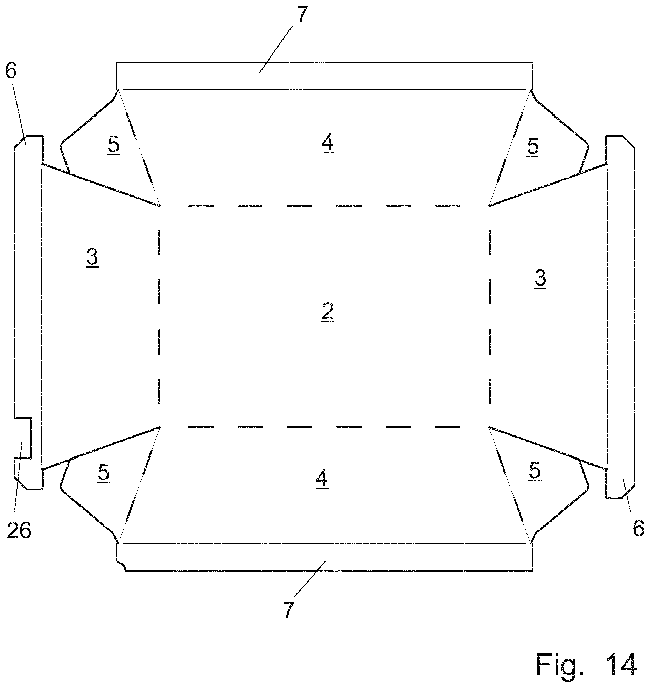

In weiterer Abwandlung kann auch eine Ausnehmung 26 am Rand des Materialstreifens 6 vorgesehen sein, wie in Fig. 14 dargestellt.

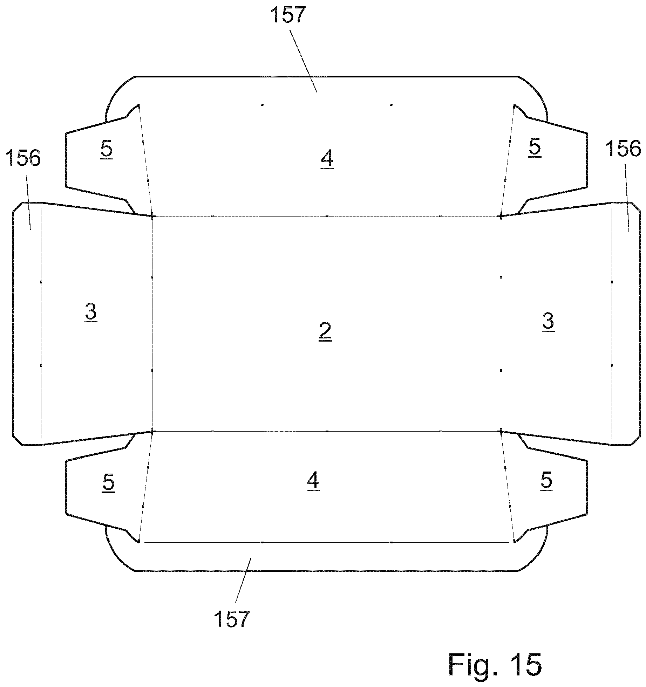

In Fig. 15 ist eine weitere Variante dargestellt, bei der die Materialstreifen 157 derart ausgebildet sind, daß sich diese mit den Materialstreifen 156 im aufgerichteten Zustand des Zuschnittes verschränken können. Es ist dabei denkbar, daß die Materialstreifen 156 und 157 beim Einbringen der Kunststofffolie 8 nach außen umgelegt werden und so den flachen Randflansch bilden.

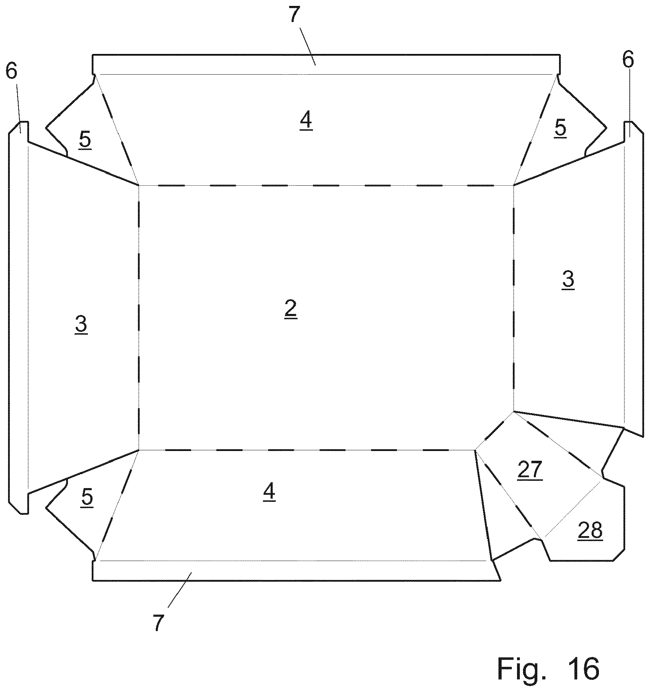

In Fig. 16 ist eine Variante des Zuschnitts dargestellt, bei dem eine abgeflachte Ecke 27 der Schale vorgesehen ist. An dieser abgeflachten Ecke 27 ist eine Grifflasche 28 vorgesehen, welche über die Kunststofffolie 8 hinaus ragt. Die abgeflachte Ecke 27 kann damit von der Kunststofffolie 8 abgezogen werden und so die Trennung von Karton und Kunststoff eingeleitet werden.

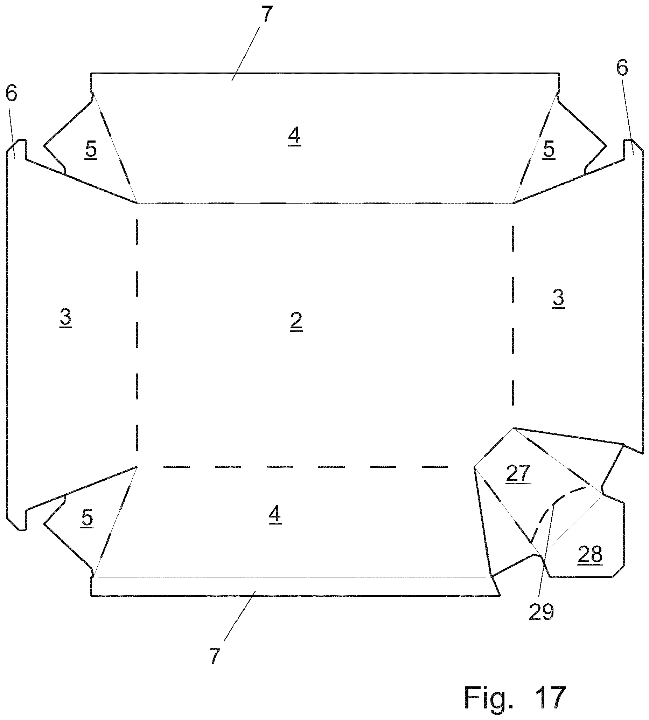

Eine Variante hiervon ist in Fig. 17 dargestellt. Zusätzlich ist in der abgeflachten Ecke 27 eine Perforation 29 vorgesehen, so daß mit Hilfe der Grifflasche 28 ein Teil der abgeflachten Ecke 27 herausgelöst werden kann und so die Kunststofffolie 8 besonders einfach ergriffen und vom Karton getrennt werden kann.

Anstelle der Perforation 29 kann auch eine Knicklinie, Ritzung, Rillung oder dergleichen angeordnet sein, so daß der Teil der abgeflachten Ecke einfach nach hinten gefaltet werden kann.

Ebenso denkbar ist, daß die Kunststofffolie 8 im Bereich der Lasche 28 nicht angesiegelt ist und so zwischen die Lasche 28 und die Kunststofffolie 8 gegriffen und die Kunststsofffolie 8 abgezogen werden kann.

Auch denkbar ist es, daß ein Teil der Grifflasche 28 so fest mit der Kunststofffolie 8 verbunden ist, daß diese zusammen mit der Kunststofffolie 8 vom restlichen Karton der Schale 1 getrennt werden können. Hierzu kann eine spezielle Geometrie der Perforation 29 vorgesehen sein, welche sicherstellt, daß die abgeflachte Ecke 27 im Gebrauch stabil ist, und erst bei Krafteinleitung über die Grifflasche 28 aufgebrochen und sauber vom restlichen Karton getrennt wird.

In den vorstehenden Ausführungsbeispielen ist der Materialstreifen 6 synonym zum Materialstreifen 7 zu verstehen.

Auf der Unterseite des Kartons kann eine Rückseitenbeschichtung, eine Rückseitenfolie, eine Imprägnierung, ein Lack und/oder eine Papierkaschierung vorgesehen sein.

Ebenfalls ist es denkbar, daß ein- oder beidseitig auf dem Karton und/oder der Kunststofffolie 8 ein Druckbild vorgesehen ist.

Zwischen den Kunststofflagen und dem Karton können beispielsweise Chips und/oder RFID Tags vorgesehen sein, die eine Verfolgung der Verpackung auf ihrem Transportweg oder auch als Diebstahlschutz, Kontrolle der Kühlung oder dergleichen eingesetzt werden können. Bei Fertiggerichten, Fertigsalaten oder dergleichen, die direkt verzehrt werden können, können Messer, Gabel und/oder Löffel so als Zugabe beigelegt sein. Diese können im Bodenbereich eingelegt sein. Ebenso ist beispielsweise die Beigabe von Give-Aways, aber auch Zutaten zum Verpackungsgut oder dergleichen auf diese Art und Weise denkbar.

Die Kunststoffolien und/oder Beschichtungen können ein- oder mehrlagig ausgebildet sein und PE, PP, PA, PET, EVOH oder dergleichen enthalten, wobei eine oder mehrere Barriereschichten vorgesehen sein können.

Die Deckelfolie bzw. der Deckelverbund kann über eine Peel-Oberfläche oder Wiederverschlußoberfläche mit dem Korpus der Verpackung, also der Kartonschale 1 verbunden sein.

Auch zwischen Karton und Kunststofffolie kann eine Peel-Oberfläche vorgesehen sein, so daß diese beiden Teile leicht voneinander getrennt werden können.

Auf der Kartonoberseite und/oder auf der Folienrückseite kann wenigstens partiell eine Beschichtung oder ein Lack vorgesehen sein, welcher die Haftung zwischen Karton und Kunststofffolie beeinflusst. Zudem ist es denkbar, daß der Karton und/oder die Folienrückseite hinsichtlich verbesserter Gleiteigenschaften modifiziert ist, so daß auch tiefere Verpackungen mit der Kunststofffolie ausgeformt werden können. Auch der Einsatz von Tiefziehstempeln ist denkbar.

Die Verpackung kann beispielsweise als schalenförmige Verpackung oder aber auch als Sandwichverpackung ausgebildet sein. Andere Verpackungsformen sind denkbar.

Die Kunststofffolie 8 und auch die Kartonverpackung 1 kann dabei aus dünnem Material gefertigt sein, da sich diese gegenseitig versteifen und so Material eingespart werden kann.

## Patentansprüche

1. Verpackung, insbesondere Verpackungsschale (1), aus einem Zuschnitt mit einem Boden (2) und daran angeordneten Seitenwänden (3, 4), aus Karton, Pappe, Papier oder dergleichen und wenigstens einer darauf auf der Kartonoberseite angeordneten Kunststofffolie (8), **dadurch gekennzeichnet, dass** die Kunststofffolie (8) der Form der Verpackungsschale (1) angepasst ist und dieser entspricht, wobei die Verpackung an sich als stabile Verpackung gefertigt sein kann, das heisst, die Seitenwände (3, 4) können aneinander befestigt sein und daß die Kunststofffolie (8) in die Verpackungsschale (1) hinein tiefgezogen oder hinein tiefgedrückt sein kann.

2. Verpackung nach Anspruch 1, **dadurch gekennzeichnet, daß** ein wenigstens teilweise umlaufender Randflansch (6, 7) vorgesehen ist, auf welchem ein Deckel, der aus Folie oder Verbundmaterial gefertigt sein kann und auch Teil der Verpackung sein kann, aufgesiegelt oder aufgeklebt ist.

3. Verpackung nach einem der vorangehenden Ansprüche, **dadurch gekennzeichnet, daß** die Kunststofffolie (8) als nachträgliche, filmbildende Beschichtung ausgebildet ist.

4. Verpackung nach einem der vorangehenden Ansprüche, **dadurch gekennzeichnet, daß** eine Grifflasche bzw. ein Eingriff (11, 14, 17, 18, 19, 21, 24, 24a, 25, 26, 28) in der Kartonverpackung vorgesehen ist, wobei eine Grifflasche (14) an der Außenseite des Kartons angeklebt sein kann und daß eine Perforation, Ritzlinien oder andere Schwächungen vorgesehen sein können, entlang welcher die Kartonverpackung auftrennbar oder ein Teil herauslösbar sein kann.

5. Verpackung nach einem der vorangehenden Ansprüche, **dadurch gekennzeichnet, daß** ein Aufreißband vorgesehen ist.

6. Verpackung nach einem der Ansprüche 4 bis 5, **dadurch gekennzeichnet, daß** die Kunststofffolie und die Kartonverpackung voneinander ablösbar ausgebildet sind, wobei ein quer, längs, diagonal oder anderweitig über die Verpackung oder einen Teilbereich der Verpackung laufender Streifen aus der Kartonverpackung herauslösbar ausgebildet sein kann und/oder daß eine Ecke oder Seitenwand bzw. ein Teil derselben aus der Kartonverpackung herauslösbar ausgebildet sein kann und/oder daß die Verpackung teilbar ausgebildet sein kann und/oder daß der herauslösbare Teil hinsichtlich seiner Breite zunimmt, ausgehend von der Anreißstelle.

7. Verpackung nach einem der vorangehenden Ansprüche, **dadurch gekennzeichnet, daß** die Kartonverpackung und die Kunststofffolie miteinander ablösbar verbunden sind und zwar durch Kleben, Adhäsion oder Siegeln.

8. Verpackung nach einem der vorangehenden Ansprüche, **dadurch gekennzeichnet, daß** die Kartonverpackung über Zwickelecken oder Klebelaschen hinsichtlich ihrer Seitenwände verbunden ist, wobei die Zwickelecken ebenfalls verklebt sein können.

9. Verpackung nach einem der vorangehenden Ansprüche, **dadurch gekennzeichnet, daß** der Randflansch an den vom Boden wegweisenden Enden der Seitenwände angeordnet ist, wobei die Randflansche der einzelnen Seitenwände jeweils miteinander verbunden sein können, wobei diese miteinander versiegelt, miteinander verklebt, miteinander verschränkt, miteinander verhakt sein können, sich gegenseitig blockieren können oder aneinander stoßen.

10. Verpackung nach einem der vorangehenden Ansprüche, **dadurch gekennzeichnet, daß** der Randflansch wenigstens teilweise entweder durch die Kartonverpackung oder durch die Kunststofffolie gebildet ist.

11. Verpackung nach einem der vorangehenden Ansprüche, **dadurch gekennzeichnet, daß** der im Karton vorgesehene Randflansch wenigstens in Überlappungsbereichen oder im Bereich von Stoßkanten verdünnt ausgebildet ist, wobei hierzu eine Fräsung vorgesehen sein kann.

12. Verpackung nach einem der vorangehenden Ansprüche, **dadurch gekennzeichnet, daß** im Boden und/oder den Seitenwänden der Kartonverpackung Öffnungen vorgesehen sind, durch die hindurch der Unterdruck zum Tiefziehen der Kunststofffolie in die Kartonverpackung hinein anlegbar ist bzw. verdrängte Luft zu entweichen vermag.

13. Verpackung nach einem der vorangehenden Ansprüche, **dadurch gekennzeichnet, daß** eine Rückseitenbeschichtung, eine Rückseitenfolie, eine Imprägnierung, ein Lack und/oder eine Papierkaschierung auf der Kartonrückseite vorgesehen ist und/oder daß auf einer oder beiden Kartonseiten und/oder auf einer der Kunststofffolien oder Beschichtungen ein Druckbild vorgesehen ist und/oder daß ein Chip, ein RFID Tag und/oder Einlagen wie beispielsweise Messer, Gabel und/oder Löffel und/oder Give-Aways zwischen oder in den Kunststofflagen und/oder im Karton vorgesehen sind.

14. Verpackung nach einem der vorangehenden Ansprüche, **dadurch gekennzeichnet, daß** die Kunststoffolien und/oder Beschichtungen ein- oder mehrlagig ausgebildet sind und PE, PP, PA, PET, EVOH oder dergleichen enthalten können, wobei eine oder mehrere Barriereschichten vorgesehen sein können.

15. Verpackung nach einem der vorangehenden Ansprüche, **dadurch gekennzeichnet, daß** zumindest die Deckelfolie bzw. der Deckelverbund über eine Peel-Oberfläche oder Wiederverschlußoberfläche mit dem Korpus der Verpackung verbunden ist und/oder daß zwischen dem Karton und dem Kunststoff eine Peelschicht vorgesehen ist.

16. Verpackung nach einem der vorangehenden Ansprüche, **dadurch gekennzeichnet, daß** auf der Kartonvorderseite und/oder auf der Folienrückseite wenigstens partiell eine Beschichtung oder ein Lack vorgesehen ist, wobei die Beschichtung auf der Kartonrückseite ausschließlich im Bereich des Randes vorgesehen sein kann.

17. Verpackung nach einem der vorangehenden Ansprüche, **dadurch gekennzeichnet, daß** die Verpackung als schalenförmige Verpackung, Menüschale, Frozen Food-Verpackung, als Sandwichverpackung oder als anderweitige Verpackung ausgebildet ist.

18. Verpackung nach einem der vorangehenden Ansprüche, **dadurch gekennzeichnet, daß** dünnere bzw. dünne Kartons und/oder dünnere bzw. dünne Folien eingesetzt werden.
